# EUROPEAN PATENT APPLICATION

(11) **EP 4 848 212 A1**
(43) Date of publication of application: **02.12.2026**
(21) Application number: 25179488.9
(22) Date of filing: 28.05.2025
(51) Int. Cl.: G06T 11/00, G06T 15/20, G06T 19/00

(54) **GENERATING MACHINING DATA BY AN AI-BASED FOUNDATION MODEL TRAINED BY AUTOMATICALLY GENERATED ANNOTATED IMAGES OF PARTS TO BE MANUFACTURED**

(71) Applicant: Siemens Aktiengesellschaft, 80333 München (DE)
(72) Inventor: COHEN, Bar, 2317 BL Leiden (NL); KESLER, Selin, 85604 Zorneding (DE); SJAROV, Martin, 91052 Erlangen (DE)
(74) Representative: Siemens Patent Attorneys

(57) **Abstract**

**Generating** machining data by an Al-based foundation model trained by automatically generated annotated images of parts to be manufactured

Computer-implemented method for automatically generating annotated images of a part to be manufactured to train an Al-based foundation model, comprising:
- receiving (S10) digital design data of a part and a set of machining data, each of said machining data being assigned to one of a set of different geometric structures of the part depicted in the digital design data,
- generating (S11) a multitude of individual digital design data, each individual digital design data depicting the part in a different combination of:
∘ one of a set of different geometric structures (32) of the part,
∘ one of a set of different graphical representations (33) of the geometric structure, and
∘ one of a set of different perspective views (31) depicting the part in a 3D-rotated view

- transforming (S12) the individual digital design data into an individual digital design image having a pre-defined image format type,
- annotating (S13) each of the individual digital design images with the machining data (35) assigned to said geometric structure,
- outputting (S14) the annotated individual digital design images, and
- training (S15) the Al-based foundation model with the annotated individual digital design images resulting in a trained-Al based foundation model which outputs machining data.

## Description

### Field of the Invention

The present disclosure relates to a system and computer-implemented method for automatically generating annotated images of a part to be manufactured to train an Al-based foundation model and a system and computer-implemented method for generating machining data by an Al-based foundation model trained by the automatically generated annotated images of a part to be manufactured.

### Background

Computer-Aided Manufacturing (CAM) integrates digital technology into manufacturing, serving as a crucial bridge between digital designs and physical production. CAM data contains the essential data required for automated manufacturing processes.

CAM data includes manufacturing instructions such as tool paths, cutting parameters, operation sequences, and machine control data like G-code and M-code commands. It also includes information about the tools, materials, and quality control specifications needed to translate digital designs, e.g., computer-aided designs (CAD) into practical manufacturing instructions for CNC machines and other automated production equipment. This comprehensive data enables a seamless conversion of digital product designs into physical parts, streamlining the manufacturing workflow and ensuring precision and consistency throughout the production process.

Despite its innovative nature, CAM is complex and time-consuming, requiring significant expertise and precision. It involves converting computer-aided design (CAD) data into machine operations, a process that demands careful consideration of factors like tool selection and machining parameters. Each decision point requires deep knowledge, as small errors can cause inefficiencies or defects. Consequently, automation is becoming essential, addressing the labor gap while enhancing precision and productivity.

In the new Al age, machine learning models are being developed to tackle challenges in the CAM world. These models have the potential to revolutionize the industry by automating complex decision-making processes and enhancing operational efficiency. However, the effectiveness of these Al solutions heavily relies on the availability of annotated data, which is currently scarce. This lack of comprehensive data poses a significant hurdle, as machine learning algorithms require vast amounts of labeled information to learn and make accurate predictions.

Therefore, it is an object of the present invention to resolve the lack of meaningful image data for training an Al-based foundation model which infers machining data from image data of a part to be manufactured. It is a further object to enable creation and thus training of a reliable Al-based foundation model for generating machining data based on input design image of a part. It is another object to reliably and precisely control manufacturing of a part based on simple digital design images of the part.

### Brief Summary of the Invention

This object is solved by the features of the independent claims. The dependent claims contain further embodiment of the invention.

A first aspect concerns a computer-implemented method for automatically generating annotated images of a part to be manufactured to train an Al-based foundation model, comprising:
- receiving digital design data of a part and a set of machining data, each of said machining data being assigned to one of a set of different geometric structures of the part depicted by the digital design data,
   generating a multitude of individual digital design data, each individual digital design data depicting the part in a different combination of:
   - one of a set of different geometric structures of the part,
   - one of a set of different graphical representations of the geometric structure, and
   - one of a set of different perspective views depicting the part in a 3D-rotated view
- transforming the individual digital design data into an individual digital design image having a pre-defined image format type,
- annotating each of the individual digital design images with the machining data assigned to said geometric structure,
- outputting the annotated individual digital design images, and
- training the Al-based foundation model with the annotated individual digital design images resulting in a trained-Al based foundation model which outputs machining data.

A second aspect concerns a system for automatically generating annotated images comprising at least one processor configured to perform the following steps:
- receiving digital design data of a part and a set of machining data, each of said machining data being assigned to one of a set of different geometric structures of the part depicted in the digital design data,
- generating a multitude of individual digital design data, each individual digital design data depicting the part in a different combination of:
   ∘ one of a set of different geometric structures of the part,
   ∘ one of a set of different graphical representations of the geometric structure, and
   ∘ one of a set of different perspective views depicting the part in a 3D-rotated view
- transforming the individual digital design data into an individual digital design image having a pre-defined image format type,
- annotating each of the individual digital design images with the machining data assigned to said geometric structure,
- outputting the annotated individual digital design images, and
- training the Al-based foundation model with the annotated individual digital design images resulting in a trained-Al based foundation model which outputs machining data.

A third aspect of the invention concerns a computer program product directly loadable into an internal memory of at least one digital computer, comprising software code portions for performing the steps of the above-described method for generating annotated images and the above-described method for generating machining data when said product is run on said at least one digital computer.

Advantageously, the described approach pairs images with their corresponding machining data, i.e., tools and operations, extracted from the annotated digital design data file in an automated manner. This allows the generation of a multitude of annotated digital design data based on a few existing annotated digital design data in a cost and time efficient manner. The resulting Al-based foundation model shows good performance due to the multitude of valuable annotated digital design data. This approach streamlines processes, improves accuracy, and reduces the need for extensive manual annotation.

A fourth aspect of the invention concerns a computer-implemented method for manufacturing a part using machining data generated by an Al-based foundation model trained according to above mentioned method, comprising the steps,
- receiving digital design data depicting a part to be manufactured,
- generating machining data by an Al-based foundation model in response to the digital design data, and
- controlling manufacturing equipment by inputting the machining data to manufacture the part.

A fifth aspect of the invention concerns a system for manufacturing a part comprising a memory storing an Al-based foundation model trained according to claim the first aspect of the invention, and at least one processor configured to perform following steps,
- receiving digital design data depicting a part to be manufactured,
- generating machining data by the Al-based foundation model in response to the digital design data, and
- controlling manufacturing equipment to manufacture the part by inputting the machining data to the manufacturing equipment.

A sixth aspect of the invention concerns a computer program product directly loadable into an internal memory of at least one digital computer, comprising software code portions for performing the steps of the above-described method for generating annotated images and the above-described method for generating machining data when said product is run on said at least one digital computer.

Advantageously, the described generation of machining data allows a fast, reliable generation of machining with minimum human interaction required for generating the machining data.

### Description of Embodiments

In an embodiment of the method said geometric structure of the part to be considered is highlighted in the individual digital design data.

Advantageously, this clearly indicates the geometric structure to which the assigned machining data are related. Highlighting is a function available in most editing tools for design data and thus requires no specific effort. Highlighting provides well defined borders of the considered geometric structure leading to an exact correlation of design and machining data.

In an embodiment a dimensioning scheme is add covering the entire part or covering only said geometric structure of the part considered in the individual digital design image.

The added dimensioning scheme enables training the Al-based foundation model to learn the perspective and scale depicted in the individual digital design image. Adding the dimensioning scheme only to the considered and highlighted geometric structure provides a focus on the geometric scheme. Adding the dimensioning scheme to the entire part allows more effective training of perspective and correlation between the considered geometric structure and the part as a whole.

In an embodiment the dimensions are retrieved from the machining data of the received digital design data.

This enlarges the number of individual digital design image with dimensioning scale and enhances the ability of the trained Al-based foundation model to estimate values for dimensions in digital design images without depicted dimensioning scale.

In an embodiment the different graphical representations of the considered geometric structure is one of a shaded representation, a wireframe representation, a translucent representation.

This provides an unbiased trained Al-based foundation model because most of the usually used graphical representations are depicted in the training data.

In an embodiment the perspective view is one of a trimetric view or an isometric view.

This provides an unbiased trained Al-based foundation model because most of the usually used views are depicted in the training data.

In an embodiment the type and number of different perspective views is predefined in the set of different perspective views.

This allows customization of training data and trained Al-based foundation model to the most commonly used perspective views for the use case.

In another embodiment the individual digital design image comprises evenly distributed pixels across the considered geometric structure.

This provides homogeneous information throughout the considered geometric structure and thus allows reliable output of the trained foundation model.

In an embodiment, the individual digital design data is transferred into an image format type by taking a snapshot of the individual digital design data.

The snapshot function is a function available in most editing tools for design data and thus requires no specific effort.

In an embodiment, the annotated digital design images are stored in a database of a retrieval-augmented generation system providing existing annotated design data to find and retrieve similar cases.

This enables making more accurate predictions by the trained Al-based foundation model by leveraging existing annotated data to find and retrieve similar cases, thereby improving the decision-making process for tools and operations.

Additionally generating, by the trained Al-based foundation model, actual machining data in response to an actual digital design data depicting a part to be manufactured and transferring the actual machining data to manufacturing equipment, which manufactures the actual part according to the actual machining data.

### Brief description of the drawings

The invention will be explained in more detail by reference to accompanying figures. Similar objects will be marked by the same reference signs.
- Figure 1: schematically illustrates an embodiment of the inventive method generating annotated images of a part and training an Al-based foundation model using the annotated images as a flow chart.
- Figure 2: schematically illustrates an embodiment of the inventive training data generating system.
- Figure 3: schematically illustrates an embodiment of the inventive method for generating machining data as a flow chart.
- Figure 4: schematically illustrates a detailed embodiment of the inventive system for generating machining data.
- Figure 5: schematically shows exemplary process of generating annotated individual digital design images according to the inventive method for generating machining data.

It is noted that in the following detailed description of embodiments, the accompanying drawings are only schematic, and the illustrated elements are not necessarily shown to scale. Rather, the drawings are intended to illustrate functions and the co-operation of components. Here, it is to be understood that any connection or coupling of functional units, modules, components or other physical or functional elements could also be implemented by a direct connection or an indirect connection coupling element, e.g., via one or more intermediate elements. A connection or a coupling of entities or components can for example be implemented by a wire-based, a wireless connection and/or a combination of a wire-based and a wireless connection. Functional modules can be implemented by dedicated hardware, e.g., processor, firmware or by software, and/or by a combination of dedicated hardware and firmware and software. It is further noted that each functional module described for an apparatus can perform a functional step of the related method and vice versa.

### Description of Embodiments

A significant challenge in advancing Al within computer-aided manufacturing CAM is the absence of curated images annotated with ground truth data for manufacturing applications like tool and operation prediction. "Curated images" typically refers to the selected, organized, managed, and presented images in a purposeful and meaningful way. This involves activities such as filtering and evaluating images based on relevance, quality, and context, categorizing and tagging images for easy retrieval and organization, enhancing image formats, resolution, and visual consistency, managing image versions, access rights, storage and arranging and displaying images to create a cohesive visual narrative or experience.

This scarcity of high-quality, labeled data sets limits the development and effectiveness of machine learning models, which rely on such data for accurate training and inference.

Addressing this data gap is crucial for enabling Al-driven progress in the CAM sector. This problem has been solved so far by utilizing manual effort, i.e., human-annotation, which does not scale the required millions of required images for training of current Al models.

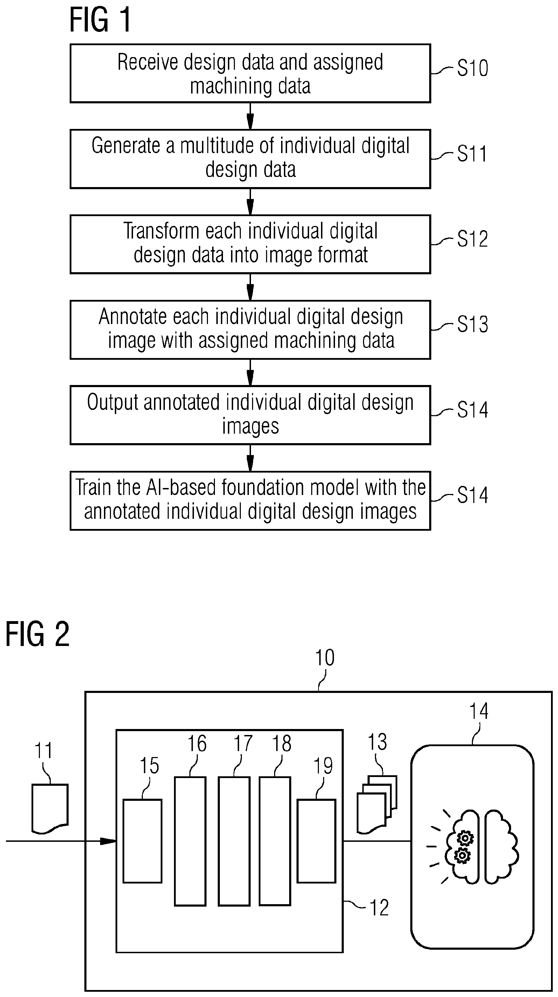

We propose a method for automatically generating annotated images of a part to be manufactured to train an Al-based foundation model. The method steps are shown in Fig.1 and described in detail hereafter.

In a first step S10 digital design data of a part and machining data assigned to the part is received. The machining data comprises a set of individual machining data being assigned to one of a set of different geometric structures of the part depicted in the digital design data.

The digital design data is received for instance in form of a data file, which can be visualized and processed by a respective SW-tool. The digital design data processed by the respective SW-tool comprises 3-dimensional data, which can be visualized in different perspectives and rotated under 3-dimensions.

Machining data used for computer-aided manufacturing comprises essential information for the manufacturing processes of the respective part, including at least one or a combination of manufacturing instructions, like tool paths, operation sequences, tool specifications, like dimensions, cutting speeds, feed rates, process parameters, like cutting depths, spindle speeds, coolant instructions, and machine control data, like G-code, M-code for computer numerical control (CNC) and coordinate systems. It also includes workpiece information, like material specs, dimensions, as well as quality control data, like tolerances, inspection points, and production management data, like operation times, resource allocation. Workpiece is used as synonym for part. This machining data transforms the digital designs into practical manufacturing instructions for CNC machines and automated manufacturing equipment.

In step S11, a multitude of individual digital design data is generated, each individual digital design data depicting the part in a different combination of one of a set of different geometric structures of the part, one of a set of different graphical representations of the geometric structure, and one of a set of different perspective views depicting the part in a 3D-rotated view. I.e., each of the generated individual digital design data shows a different geometric structure of the part in a different graphical representation and under a different perspective view. Thus, assuming one single digital design data file depicts a part having 10 different geometric structures, which can be depicted in 3 different graphical representations under 10 different views, results in 500 individual digital design data.

The individual digital design data are transformed into an individual digital design image having a pre-defined image format type, see step S12. Example image format types are jpeg or png. Each of the individual digital design images is annotated with the machining data, preferably only those machining data assigned to said geometric structure, see S13. Subsequently the output, see step S14. The all or at least a selection of the output annotated individual digital design images are used as training data to train the Al-based foundation model to output machining data in response to a digital design data image.

The received digital design data is loaded into and processed by the respective SW-tool applicable for the file-format in which the digital design data is structured. The digital design data of the part shows faces and/or edges of different form and extend. The part described by the digital design data processed as described below.

For generating the multitude of individual digital design data, a set of different geometric structures, also called regions, are identified comprising a combination of faces and edges, e.g., of recognized features. For each of the identified individual geometric structures, the considered geometric structure of the part is highlighted. Each of the highlighted geometric structures are depicted in different graphical representations, e.g., in a shaded representation, a wireframe representation, a translucent representation, or the like. Each of these graphical representations of the highlighted geometrical structure is depicted in one of a set of different perspective views, e.g., a trimetric view or an isometric view, or the like. The sequence can be deliberately chosen in which the graphical representation and the different views are performed.

Each individual combination of geometric structure depicted under a dedicated view and in a certain graphical representation, i.e., each individual digital design data, is transferred into an image format, i.e., the individual digital design image. For instance, the individual digital design data is transferred into an image format type by taking a snapshot of the aspect digital design data.

The individual digital design image is augmented by a dimensioning scheme covering the entire part or covering only said geometric structure of the part considered in the individual digital design image. The dimensions are retrieved from the machining data of the received digital design data or by optical character recognition capabilities for reading values of dimensions from the individual digital design data or image. The dimensions are either retrieved from the inherent part geometry, from provided technical drawings accompanying the geometry data or from PMI data attached in 3D to the geometry, i.e., geometric structure.

Understanding dimensions is crucial for machining tool and operation decisions. It ensures comprehension of the dimensions and units of the part.

The individual digital design image comprises evenly distributed pixels across the considered geometric structure. Image augmentation maximizes information extraction from the 3D model, beyond simple snapshots. We implement techniques that enhance 3D understanding relevant to CAD/CAM, rather than standard image augmentations like scaling or rotation. Such techniques are for instance providing render modes like "Opaque", "Transparent", "Wireframe" or providing arbitrarily many different 3D camera views of the same part or same geometric structure. A further technique is highlighting certain regions of interest in a certain color.

Each individual digital design image is linked with the corresponding machining data concerning tool and operation control. These annotated individual digital design images are not only used for training the Al-based foundation model but also, they can also be stored in a database of a retrieval-augmented generation system providing existing annotated data to find and retrieve similar cases.

Advantageously, the method generates a large dataset of training samples from a relatively small number of annotated Computer-aided-manufacturing (CAM) parts. By creating potentially millions of training samples, this significantly enhances the diversity and quality of a training dataset, allowing Al models to better learn and generalize. This approach can help overcome the challenge of acquiring large amounts of annotated design data, which is often a bottleneck in training robust Al models.

A retrieval-augmented generation system, in short RAG system, combines retrieval of relevant data with generative processes. In this context, the RAG system uses the annotated individual digital design images to collect similar images along with their associated machining data, e.g., tools and operations. This supports in making more accurate predictions by leveraging existing annotated design data to find and retrieve similar cases, thereby improving the decision-making process, e.g., by the trained Al-based foundation model for tools and operations.

Fig. 2 shows an embodiment of a system for automatically generating annotated images. The system 10 comprises a memory and at least one processor which are configured as an image generator 12 and an Al-based foundation model 14.

A computer program product comprising software code portions can be directly loaded into the memory of at least one processor, which performs the above-described steps method steps when the computer program product is run on the at least one processor.

The image generator 12 comprises a data input interface 15, a generator unit 16, a transformation unit 17, an annotation unit 18 and a data output interface 19.

The data input interface 15 is configured to receive digital design data 11 of a part coupling design data with a set of machining data. Each of said set of machining data is assigned to one of a set of different geometric structures of the part depicted in the digital design data.

The image generator 12 is configured to generate a multitude of individual digital design data, wherein each individual digital design data shows the part in a different combination one of a set of different geometric structures of the part, one of a set of different graphical representations of the geometric structure, and one of a set of different perspective views depicting the part in a 3D-rotated view.

The transformation unit 17 is configured to transform each individual digital design data 11 into an individual digital design image having a pre-defined image format type. The annotation unit 18 is configured to annotate each of the individual digital design images with the machining data assigned to said geometric structure. The data output interface 19 is configured to output the multitude of annotated individual digital design images 13.

Thus, the image generator 12 generates from one single digital design data 11 a multitude of different individual digital design images 13. All or a selection of the multitude of different annotated individual digital design images 13 are transferred to the Al-based foundation model 14 to train this. The resulting trained-Al based foundation model 14 is able to output machining data of an actual part in response to an image of the actual part.

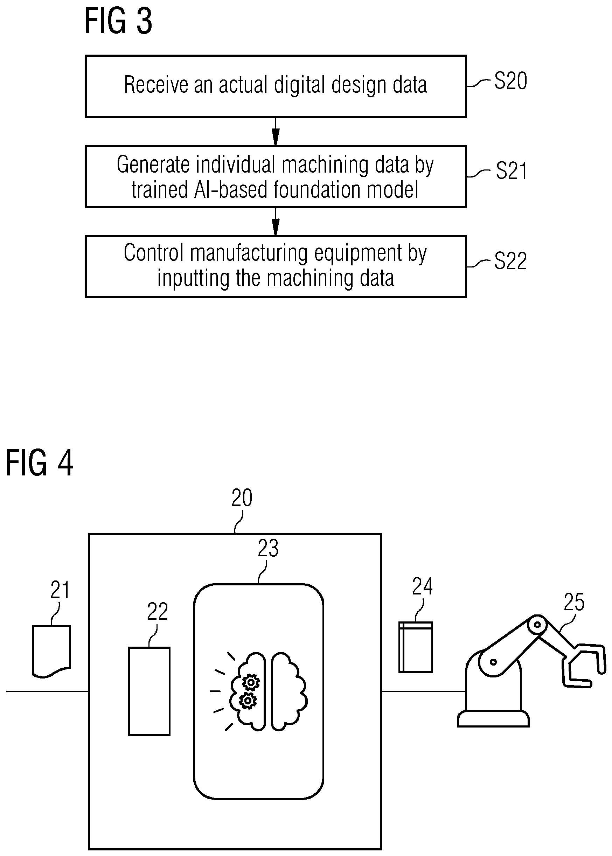

Fig. 3 illustrates an application of a trained Al-based foundation model, which is trained according to the above-described method for manufacturing a part.

In first step S20, an actual digital design data is received depicting the actual part to be manufactured. The actual digital design data does not require to contain any machining data itself. The actual digital design data can be provided as design data images, structured text, free text or computer-aided design data structure. Based on this input digital design data machining data is generated by the Al-based foundation model in response to the digital design data, see S21. The generated machining data is input into the manufacturing equipment for controlling the manufacturing of the part.

Fig.4 depicts a respective system 20 for manufacturing a part. System 20 comprises a memory and at least one processor. A computer program product comprising software code portions can be directly loaded into the memory of at least one processor, which performs the above-described method steps when the computer program product is run on the at least one processor.

System 20 comprises a design data input interface 22 and a trained Al-based foundation model 23 trained according to the method depicted in Fig. 1.

The design data input interface 22 is configured to receive digital design data 21 preferably in image format depicting a part to be manufactured. The trained Al-based foundation model 23 is configured to infer machining data 24 from the digital design data 21. The machining data 24 is transferred to manufacturing equipment 25. The machining data 24 controls the manufacturing equipment 25 to manufacture the part.

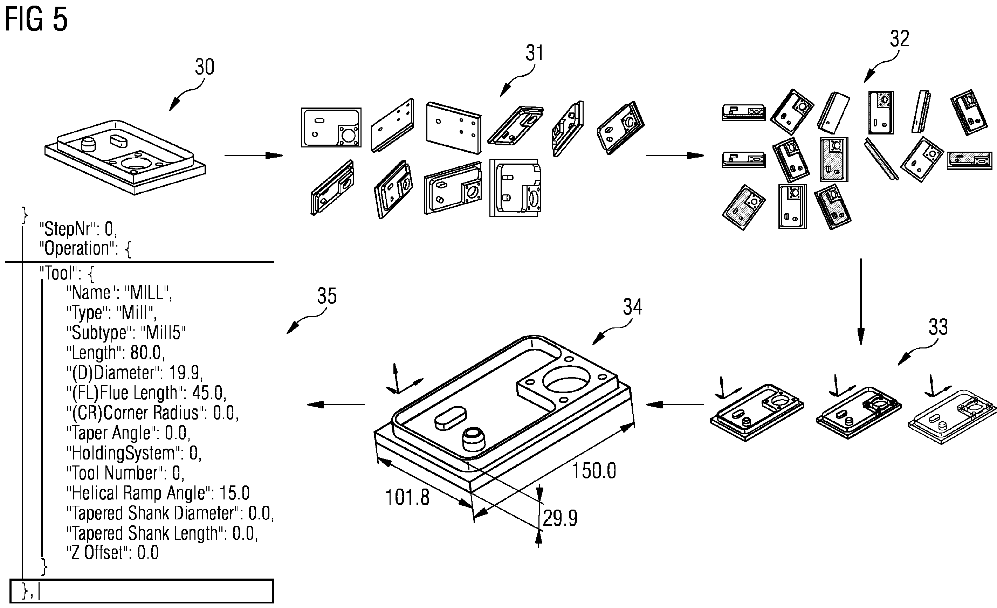

Fig. 5 shows an exemplary implementation flow of generating annotated individual digital design images according to the inventive method for generating machining data.

The process starts with a digital design data file, e.g., a computer-aided-design (CAD) file, for instance an annotated digital design data file in prt-format comprising machining data representing a part to be manufactured. Such annotated CAD files are known as computer-aided-manufacturing (CAM) files. Fig 5 shows a visualized digital design data 30.

Settings for a generation algorithm of individual digital design data are defined. Exemplary settings for the different perspective views are a trimetric view and an isometric view to capture images from standard perspectives. A number of different 3-dimensional rotated views are pre-defined for comprehensive coverage of the part, see 31. In isometric projection, the most commonly used form of axonometric projection in engineering drawing, the direction of viewing is such that the three axes of space appear equally foreshortened, and there is a common angle of 120° between them. In trimetric projection, the direction of viewing is such that all of the three axes of space appear unequally foreshortened. The scale along each of the three axes and the angles among them are determined separately as dictated by the angle of viewing.

Additionally, settings are defined to ensure even sampling when transferring the individual design data into image format. E.g., a Fibonacci sphere sampling method is set to capture images from optimally distributed camera positions. The Fibonacci sphere sampling method is a technique for generating evenly distributed points on a sphere's surface. This method is particularly valuable because it provides nearly uniform distribution with simple computational requirements.

The generation algorithm is performed on specific highlighted geometric structures, iterating over all machined regions in the annotated digital design data, see 32. Image augmentation maximizes information extraction from the 3D model represented by the annotated digital design data beyond simple snapshots. Techniques are applied that enhance 3D understanding relevant to CAD/CAM, rather than standard image augmentations like scaling or rotation. E.g., different graphical representations are applied such as different shadings to the same image, like fully shaded, semi-shaded, wireframe, to extract varied representations, see 33.

An image measurement overlay is generated as understanding dimensions is crucial for machining tool and operation decisions, see 34. It ensures comprehension of dimensions and units of the considered part. Thus, optical character recognition capabilities, short OCR capabilities, are used for reading dimensions. Interpretation of dimensions for related, non-given measurements is facilitated by integrating measurement overlays on the images. It supports prediction of manufacturing data, like tool and operation prediction, which depends on accurate dimensions.

The measurement overlay is a visual layer that displays measurement information on top of images or visual representations. It includes elements like dimension lines, measurement values, scale indicators, and reference markers. These overlays are crucial in technical applications such as engineering drawings, medical imaging, scientific analysis, and quality control. They provide real-time measurements, interactive adjustments, and calibrated scales without altering the original image. The system enables users to add quantitative information, perform visual measurement analysis, and ensure accurate scaling while maintaining documentation standards. This functionality is essential for precise measurements and comparative analysis in professional applications.

Each of the generated individual digital design images is linked to corresponding machining data like tool and operation annotation, see 35.

A pseudocode for generating annotated individual digital design images is provided below.

Given the definitions:
- Region: A set of faces and edges of the 3D BREP Geometry, wherein a boundary representation, abbreviated BREP, is a method for representing a 3D shape by defining the limits of its volume. A solid is represented as a collection of connected surface elements, which define the boundary between interior and exterior points.
- RegionCreationTask: Instruction to generate a region from either faces of recognized features ("FBM Features"), or faces/edges of programmed operations, or all single faces, or all single edges
- RenderMode: Way to display the part, e.g., shaded, wireframe, translucent
- SnapshotAlgorithm: Way to determine needed camera perspectives

**For** each .prt file in a given dataset containing machining data:
Generate regions based on the RegionCreationTask
**For** each region + once for the entire part:
   Highlight faces/edges of the region
   Create PMI / Measurement overlays as configured
   **For** each RenderMode:
      Display part accordingly
      **For** each perspective needed according to the snapshot algorithm:
         Rotate camera perspective
         Take Image in configured file format
Generate all textual metadata files

In total (# files) x (# regions + 1) x (# render modes) x (# perspectives) number of images are generated.

This proposed method enhances the generation process through image augmentation and measurement overlay additions which is innovative on by itself. The alternative manual extraction method is insufficiently scalable for generating the volume of data needed to train an Al model effectively and lacking the required extracted detail from a CAM system.

It is to be understood that the above description of examples is intended to be illustrative and that the illustrated components are susceptible to various modifications. For example, the illustrated concepts could be applied for different technical systems and especially for different sub-types of the respective technical system with only minor adaptions.

## Claims

1. Computer-implemented method for automatically generating annotated images of a part to be manufactured to train an Al-based foundation model, comprising:
- receiving (S10) digital design data of a part and a set of machining data, each of said machining data being assigned to one of a set of different geometric structures of the part depicted in the digital design data,
- generating (S11) a multitude of individual digital design data, each individual digital design data depicting the part in a different combination of:
∘ one of a set of different geometric structures (32) of the part,
∘ one of a set of different graphical representations (33) of the geometric structure, and
∘ one of a set of different perspective views (31) depicting the part in a 3D-rotated view
- transforming (S12) the individual digital design data into an individual digital design image having a pre-defined image format type,
- annotating (S13) each of the individual digital design images with the machining data (35) assigned to said geometric structure,
- outputting (S14) the annotated individual digital design images, and
- training (S15) the Al-based foundation model with the annotated individual digital design images resulting in a trained-Al based foundation model which outputs machining data.

2. Computer-implemented method according to any of the preceding claims, wherein highlighting said geometric structure (32) of the part to be considered in the individual digital design data.

3. Computer-implemented method according to any of the preceding claims, wherein adding a dimensioning scheme (34) covering the entire part or covering only said geometric structure of the part considered in the individual digital design image.

4. Computer-implemented method according to claim 3, wherein retrieving the dimensions from the machining data of the received digital design data.

5. Computer-implemented method according to claim 3, wherein determining the dimensions by optical character recognition capabilities from the individual digital design image in image format.

6. Computer-implemented method according to any of the preceding claims, wherein the different graphical representations (33) of the considered geometric structure is one of a shaded representation, a wireframe representation, a translucent representation.

7. Computer-implemented method according to any of the preceding claims, wherein the perspective view (31) is one of a trimetric view or an isometric view.

8. Computer-implemented method according to claim 7, wherein predefining the type and number of different perspective views is in the set of different perspective views.

9. Computer-implemented method according to any of the preceding claims, wherein the individual digital design image comprises evenly distributed pixels across the considered geometric structure.

10. Computer-implemented method according to any of the preceding claims, the annotated individual digital design images are stored in a database of a retrieval-augmented generation system providing existing annotated data to find and retrieve similar cases.

11. Computer-implemented method for manufacturing a part using machining data generated by an Al-based foundation model trained, comprising the steps,
- receiving (S20) actual digital design data (21) depicting a part to be manufactured,
- generating (S21) machining data by the trained Al-based foundation model (23) in response to the digital design data (21), and
- controlling (S22) manufacturing equipment (25) by inputting the machining data (24) to manufacture the part.

12. System (10) for automatically generating annotated images comprising at least one processor configured to perform the following steps:
- receiving (S10) digital design data of a part and a set of machining data, each of said machining data being assigned to one of a set of different geometric structures of the part depicted in the digital design data,
- generating (S11) a multitude of individual digital design data, each individual digital design data depicting the part in a different combination of:
∘ one of a set of different geometric structures (32) of the part,
∘ one of a set of different graphical representations (33) of the geometric structure, and
∘ one of a set of different perspective views (31) depicting the part in a 3D-rotated view
- transforming (S12) the individual digital design data into an individual digital design image having a pre-defined image format type,
- annotating (S13) each of the individual digital design images with the machining data (35) assigned to said geometric structure,
- outputting (S14) the annotated individual digital design images, and
- training (S15) the Al-based foundation model with the annotated individual digital design images resulting in a trained-Al based foundation model which outputs machining data.

13. System (20) for manufacturing a part comprising a memory storing a trained Al-based foundation model (23) trained according to claim 1 to 11, and at least one processor configured to perform following steps,
- receiving actual digital design data (21) depicting a part to be manufactured,
- generating machining data by the Al-based foundation model (23) in response to the digital design data (21), and
- controlling manufacturing equipment (25) to manufacture the part by inputting the machining data (24) into the manufacturing equipment (25).

14. A computer program product directly loadable into an internal memory of at least one digital computer, comprising software code portions for performing the steps of claims 1-10 when said product is run on said at least one digital computer.

15. A computer program product directly loadable into an internal memory of at least one digital computer, comprising software code portions for performing the steps of claim 11 when said product is run on said at least one digital computer.
